# NEUE EUROPÄISCHE PATENTSCHRIFT

(11) **EP 2 454 008 B2**
(45) Veröffentlichungstag und Bekanntmachung des Hinweises auf die Entscheidung über den Einspruch: **19.02.2020**
(45) Hinweis auf die Patenterteilung: 15.05.2013
(21) Anmeldenummer: 10727333.6
(22) Anmeldetag: 14.06.2010
(51) Int. Cl.: B01D 53/86

(54) **VERFAHREN ZUR ENTSTICKUNG VON RAUCHGASEN**
PROCESS FOR DENOXING OF FLUE GASES
PROCÉDÉ DE DÉNITRURATION DE GAZ DE FUMÉE

(30) Priorität: 15.07.2009 AT 11092009
(43) Veröffentlichungstag der Anmeldung: 23.05.2012
(60) Teilanmeldung: 13167684.3
(73) Patentinhaber: Scheuch GmbH, 4971 Aurolzmünster (AT)
(72) Erfinder: LISBERGER, Manfred, A-4752 Riedau (AT)
(74) Vertreter: Sonn & Partner Patentanwälte
(86) Internationale Anmeldenummer: PCT/AT2010/000212
(87) Internationale Veröffentlichungsnummer: WO 2011/006175

(56) Entgegenhaltungen:
- WO-A1-97/09112
- AT-A4- 505 542
- AT-U- 010 369
- DE-A1- 4 432 316
- DE-A1- 4 432 316
- DE-A1- 19 720 205
- US-A1- 2009 130 011

## Beschreibung

Die Erfindung betrifft ein Verfahren gemäß dem Oberbegriff von Anspruch 1.

Die vorliegende Erfindung bezieht sich auf die Entstickung von Rauchgasen, welche Kohlenstoffmonoxid und gasförmige organische Stoffe enthalten, nämlich Rauchgase, die bei der Zementklinkerherstellung anfallen, wo in Drehrohröfen die Rohstoffe, welche für die Zementklinkerbildung erforderlich sind, auf Temperaturen von 1350°C bis 1700°C aufgeheizt werden. Die Rohstoffe werden üblicherweise in einem Vorwärmturm bestehend aus mehreren hintereinander angeordneten Zyklonen vorgewärmt, bevor sie in den Drehrohrofen gelangen. Die Abgase durchströmen den Produktionsprozess im Gegenstrom zum Materialfluss und werden nach dem Verlassen der letzten Zyklonwärmstufe einer Abgasreinigung zugeführt. Bei der Entstickung, die einen Teil der Abluftreinigung darstellt, wird mit sogenannten SCR (selective catalytic reduction)-Katalysatoren durch Zugabe von Ammoniak bzw. Ammoniak abgebenden Verbindungen, wie z.B. Ammoniak-Wasser oder Harnstoff, bei optimaler Betriebstemperatur eine Spaltung der Stickoxide NOₓ in den Abgasen in umweltneutralen Luftstickstoff N₂ und Wasser H₂O erreicht. Die Abgase gelangen nach einer allfälligen Abkühlung bzw. Wärmerückgewinnung schlussendlich in eine Filterstufe, wo sie entstaubt werden, bevor sie in die Atmosphäre austreten. Die Filterstufe vor dem Austritt der Abgase in die Atmosphäre kann beispielsweise durch Elektro- oder Schlauchfilter gebildet werden.

Der relativ hohe Staubanteil der Rohgase bei der Zementklinkerherstellung, führt zu einer raschen Verstopfung der Katalysatoren. Um die Standzeiten des Katalysators zu erhöhen, werden die Katalysatoren häufig reingasseitig, d.h. nach der Entstaubung der Rohgase, angeordnet. Nachteilig dabei ist, dass die Rauchgase vor der katalytischen Reduktion auf die notwendige Reaktionstemperatur von üblicherweise 160°C bis 500°C erwärmt werden müssen. Diese Erwärmung der Rauchgase erfolgt häufig durch einen Rekuperator bzw. Wärmetauscher, welcher den entstickten Rauchgasen die Wärme entzieht und den Rauchgasen vor der katalytischen Reduktion zuführt. Die Verluste der Wärmeverschiebung des Wärmeaustauschs machen eine zusätzliche Erwärmung der Rauchgase mittels externer Energie unbedingt erforderlich.

Die AT 505 542 B1 beschreibt beispielsweise eine Anlage zur Reinigung der Rauchgase bei der Zementherstellung, wobei die Rauchgase mit zumindest einer Verbrennungseinrichtung zur Stromerzeugung, beispielsweise einer Gasturbine oder einem Gasmotor, die bzw. der insbesondere mit Erdgas betrieben wird, erhitzt werden.

Die DE 197 05 663 A1 beschreibt eine Einrichtung zur Entstickung von Rauchgasen, wobei jedoch aufgrund der bereits hohen Abgastemperatur von etwa 800°C bis 1000°C keine Aufheizung der Gase für die katalytische Reduktion erforderlich ist.

Die US 2009/130011 A1 betrifft ein System und ein Verfahren zur Entstickung von Rauchgasen durch regenerative selektive katalytische Reduktion (RSCR), wobei die Rauchgase in alternierender Richtung durch Kanäle geleitet werden, in welchen Kanälen mehrere Wärmespeichermodule und mehrere Katalysatoren angeordnet sind.

Die DE 197 20 205 A1 beschreibt ein Verfahren und eine Anlage zur Reinigung von Rauchgasen, welche mit Stickoxiden beladen sind. Dabei findet eine reine Entstickung ohne eine Nachverbrennung der Rauchgase statt. Der Katalysator wird immer in einer Richtung von den Rauchgasen durchströmt.

Schließlich zeigt die DE 44 32 316 A1 ein Verfahren und eine Anlage zur Reinigung von Abgasen, wobei die zu reinigenden Abgase kein Kohlenstoffmonoxid enthalten. Die in diesem Dokument erwähnte Nachverbrennung erfolgt nicht zum Zweck der Energierückgewinnung und Verbesserung des Wirkungsgrades, sondern zur Reduktion des bei der katalytischen Reaktion entstehenden Dioxins in den Abgasen.

Die Aufgabe der vorliegenden Erfindung besteht darin, ein Verfahren der oben genannten Art zu schaffen durch welche der Einsatz externer Energie minimiert oder vermieden werden kann und dennoch ein hoher Entstickungsgrad erreicht werden kann. Nachteile bekannter Verfahren bzw. Vorrichtungen sollen reduziert bzw. vermieden werden.

Gelöst wird die erfindungsgemäße Aufgabe durch ein Verfahren mit den Merkmalen von Anspruch 1. Die Nachverbrennung ist zur Reinigung von Rauchgasen bekannt. Darunter wird die Verbrennung von Rauchgasen zur Reduktion der organischen Substanzen verstanden. Bei der thermischen Nachverbrennung sind Verbrennungstemperaturen im Bereich von ca. 750 bis 900 °C üblich. Allenfalls werden zusätzliche Brennstoffe und Verbrennungsluft zugesetzt. Die katalytische Nachverbrennung ist durch einen in der Brennkammer enthaltenen Katalysator, welcher die Oxidationsprozesse beschleunigt, charakterisiert. Dadurch sind niedrigere Verbrennungstemperaturen von ca. 300 bis 500 °C notwendig. Bei der regenerativen Nachverbrennung kann die Zugabe von Brennstoff dadurch stark reduziert werden, dass die Rauchgastemperatur durch Wärmetausch bis fast auf die Verbrennungstemperatur erhöht wird. Erfindungsgemäß ist also vorgesehen, dass das Kohlenstoffmonoxid und die gasförmigen organischen Stoffe in den Rauchgasen nachverbrannt werden. Die bei der Nachverbrennung entstehende Energie wird erfindungsgemäß zur Erhöhung der Temperatur der Rauchgase auf die katalytische Reaktionstemperatur verwendet. Neben der energiesparenden Form der Erwärmung der Rauchgase für die katalytische Reduktion werden auch die in den Rauchgasen enthaltenen Kohlenmonoxide und/oder gasförmigen organischen Stoffe gesenkt. Die notwendige Energiemenge, beispielsweise in Form von Erdgas, kann durch das erfindungsgemäße Verfahren erheblich gesenkt werden, wobei die Zufuhr von externer Energie nur beim Anfahren notwendig ist. Der Aufwand für die Umsetzung des erfindungsgemäßen Verfahrens ist relativ gering und das Verfahren kostengünstig durchführbar. Durch die regenerative Nachverbrennung werden somit die Rauchgase nicht nur entstickt sondern auch deren Kohlenmonoxidgehalt und deren Gehalt an gasförmigen organischen Stoffen reduziert. Durch die Reduktion der gasförmigen organischen Stoffe, insbesondere organischer Verbindungen sogenannter "Volatile Organic Compounds" (VOCs), kann die Geruchsbelastung durch die Rauchgase reduziert werden.

Die Rauchgase werden in alternierender Richtung durch mindestens zwei Kanäle mit mehreren aufeinanderfolgenden Wärmespeichermodulen und einem dazwischen angeordneten Raum zur regenerativen Nachverbrennung geleitet und die katalytische Reduktion der Stickoxide in zwischen den Wärmespeichermodulen angeordneten Katalysatoren durchgeführt. Dabei werden Wärmespeichermodule und Katalysatoren in Kanälen kombiniert und durch die alternierende Richtung der Rauchgase den Rauchgasen die für die katalytische Reduktion erforderliche Wärme entzogen. Durch die regenerative Nachverbrennung des Kohlenstoffmonoxids und der gasförmigen organischen Stoffe in den Rauchgasen kann das Verfahren autotherm, d.h. ohne externe Energiezuführung, ablaufen und somit ein hoher Wirkungsgrad erzielt werden.

Zum Starten der Entstickung der Rauchgase wird externe Wärmeenergie zugeführt. Diese externe Wärmeenergie kann beispielsweise durch Verbrennung von externen Energieträgern wie z.B. Erdgas oder Erdöl erzeugt werden.

Vorteilhafterweise werden die Rauchgase zu mindestens 60% entstickt.

Die vorliegende Erfindung wird anhand der beigefügten Zeichnungen näher erläutert. Darin zeigen:
Fig. 1 eine schematische Darstellung der Anlage zur Zementklinkerherstellung nach dem Stand der Technik;
Fig. 2 eine schematische Ansicht einer Entstickungsvorrichtung; und
Fig. 3 eine Ausführungsform einer erfindungsgemäss verwendeten Entstickungsvorrichtung.

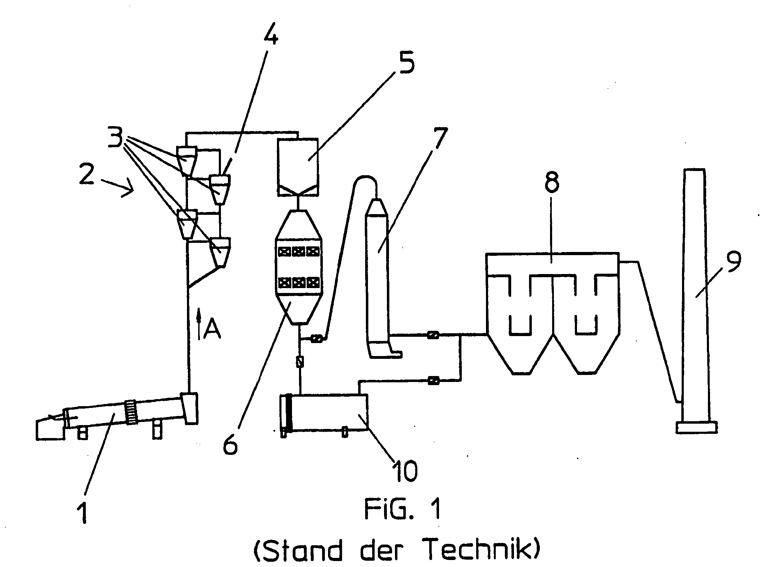

Fig. 1 zeigt eine schematische Ansicht einer Vorrichtung zur Zementklinkerherstellung nach dem Stand der Technik. Die Vorrichtung zur Zementklinkerherstellung besteht aus einer Ofenanlage, insbesondere einem Drehrohrofen 1, in welcher die Rohstoffe zur Herstellung des Zementklinkers gebrannt werden. Üblicherweise werden die Rohstoffe in einem Vorwärmturm 2, der aus einer Vielzahl übereinander angeordneter Zyklone 3 bestehen kann, vorgewärmt. Zu diesem Zweck werden die Rohstoffe über eine Materialaufgabe 4 im Vorwärmturm 2 aufgegeben. Nach dem Gegenstromprinzip gelangt das Rohmaterial in den Drehrohrofen 1, wohingegen die Rauchgase A gegen den Strom des Rohmaterials durch den Vorwärmturm 2 strömen. Nach dem Vorwärmturm 2 gelangen die Rohgase A, welche sowohl Stickoxide NOₓ als auch Staub enthalten, in einen Filter 5, wo der Staubgehalt der Rohgase A entsprechend reduziert wird. Danach gelangen die Rohgase A in einen Katalysator 6, in welchem durch entsprechende katalytische Reaktion die Stickoxide NOₓ zum Teil in Stickstoff N₂ und Wasser H₂O umgewandelt werden. Die entstickten Rohgase A werden durch eine allfällige Kühleinrichtung 7 geleitet, um einerseits die Rauchgase A auf eine Temperatur herabzusenken, welche für eine nachfolgende Filterstufe 8 zur Entstaubung der Rauchgase A geeignet ist. Andererseits kann durch eine derartige Kühleinrichtung 7 die in den Rauchgasen A enthaltene Wärme rückgewonnen und zum Erwärmen der Rauchgase A vor dem Katalysator 6 verwendet werden. Nach der Filterstufe 8, die durch Schlauchfilter oder Elektrofilter gebildet sein kann gelangen die entstickten und entstaubten Rauchgase A über einen Schornstein 9 in die Atmosphäre. Nach dem Katalysator 6 gelangt das mit den Rauchgasen A beförderte, gebrannte Rohmaterial des Zementklinkers in eine Mühle 10, wo es vor der Abfüllung auf eine gewünschte Größe vermahlen wird.

Wie bereits erwähnt, ist es durch die Wärmerückgewinnung üblicherweise nicht möglich die Rauchgase A auf die erforderliche Reaktionstemperatur von vorzugsweise 160°C bis 500°C für die katalytische Reduktion im Katalysator 6 aufzuwärmen. Daher ist es nach dem Stand der Technik erforderlich, durch externe Energiezufuhr den Wärmeverlust auszugleichen. Die externe Energiezufuhr ist aufgrund der damit verbundenen Kosten jedoch zu vermeiden.

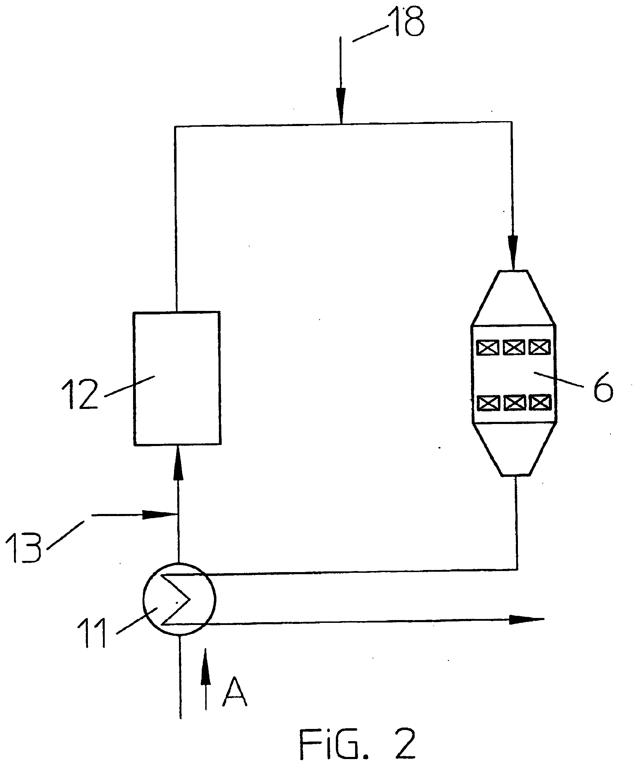

Fig. 2 zeigt eine Entstickungsvorrichtung mit regenerativer Nachverbrennung des Kohlenstoffmonoxids und der gasförmigen organischen Stoffe in den Rauchgasen A. Die Rauchgase A gelangen nach einer üblichen Filterung (nicht dargestellt) in einen Wärmetauscher 11, wo sie auf die Reaktionstemperatur T_{R} des Katalysators 6 von 160°C bis 500°C erwärmt werden. Der Wärmetauscher 11 entzieht den Rauchgasen im Katalysator 6 und allenfalls nach einer nachfolgenden Filterstufe die Wärmeenergie, sodass die Rauchgase A nach dem Eintritt in den Katalysator 6 auf die Reaktionstemperatur T_{R} gebracht werden. Üblicherweise ist aufgrund der Verluste der Wärmeverschiebung im Wärmetauscher 11 eine Erwärmung der Rauchgase auf die gewünschte Reaktionstemperatur T_{R} nicht möglich und es muss externe Energie zugeführt werden. Bei der Vorrichtung gemäß Fig. 2 werden die Verluste der Wärmeverschiebung im Wärmetauscher 11 dadurch ausgeglichen, dass das Kohlenstoffmonoxid CO und die gasförmigen organischen Stoffe in den Rauchgasen A nachverbrannt werden. Zu diesem Zweck befindet sich zwischen dem Wärmetauscher 11 und dem Katalysator 6 eine Stufe 12 zur regenerativen Nachverbrennung des Kohlenstoffmonoxids CO und der gasförmigen organischen Stoffe der Rauchgase A. Neben Lenkung der externen Energiemenge werden bei Nachverbrennung in der Stufe 12 auch das Kohlenstoffmonoxid CO und die gasförmigen organischen Stoffe in den Rauchgasen reduziert. Die bei der Nachverbrennung in der Stufe 12 entstehenden Stickoxide bzw. in den Rauchgasen enthaltene Stickoxide NOₓ werden schließlich im Katalysator 6 entfernt. Zum Starten und/oder zum Aufrechterhalten der Betriebstemperatur der Entstickung der Rauchgase A kann eine Vorrichtung 13 zur Zuführung externer Wärmeenergie, beispielsweise eine Erdgasleitung, vor der Nachverbrennungsstufe 12 angeordnet sein. Die Vorrichtung erhöht somit durch die Senkung der externen Energiemenge nicht nur den Wirkungsgrad sondern reduziert sowohl die Stickoxide NOₓ als auch den hohen Gehalt an Kohlenmonoxid CO und an gasförmigen organischen Stoffen. Durch die Verbrennung des Kohlenmonoxids CO in den Rauchgasen ist der Einbau einer zusätzlichen Lage eines sogenannten Oxidationskatalysators nicht notwendig. Ein Oxidationskatalysator sorgt für die Oxidation des Kohlenstoffmonoxids CO zu Kohlendioxid CO₂. Diese speziellen Katalysatoren sind durch die Dotierung mittels Edelmetalle wie z.B. Platin, Palladium und dergl. sehr kostenintensiv und auch sehr anfällig für die Vergiftung mittels Schwermetalle.

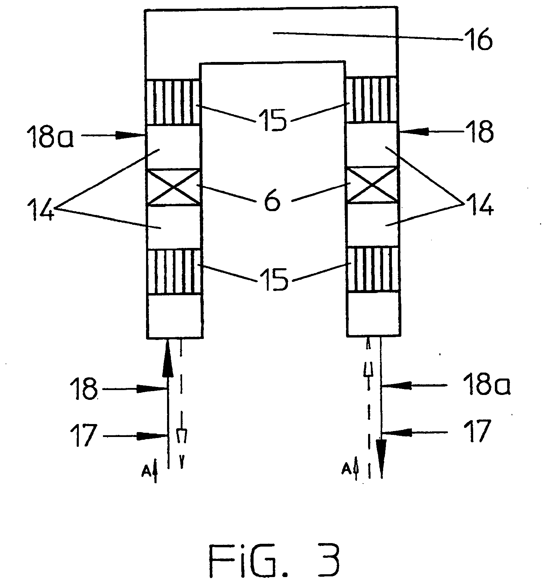

Fig. 3 zeigt eine erfindungsgemäss verwendete Entstickungsvorrichtung mit einem kombinierten Wärmespeicher und Katalysator. Bei dieser Ausführungsform werden die Rauchgase A in alternierender Richtung durch zwei Kanäle 14 mit mehreren aufeinanderfolgenden Wärmespeichermodulen 15 und einem dazwischen angeordneten Raum 16 zur regenerativen Nachverbrennung des Kohlenstoffmonoxids CO und der gasförmigen organischen Stoffe der Rauchgase A geleitet. Durch die Durchströmungsrichtung wird den Rauchgasen A in den Wärmespeichermodulen 15 die Wärmeenergie entzogen, welche erforderlich ist um die Rauchgase A auf die Reaktionstemperatur T_{R} der Katalysatoren 6 zu bringen. Über eine Leitung 17 kann Brennstoff wie z.B. Erdgas zugeführt werden. Über entsprechende Leitungen 18 bzw. 18a nach Strömungsumkehr werden die für die katalytische Reduktion in den Katalysatoren 6 erforderlichen Stoffe, vorzugsweise Ammoniak, zugesetzt. Die Steuerung der alternierenden Durchströmungsrichtung erfolgt durch entsprechende Steuereinrichtungen (nicht dargestellt). Die Wärmespeichermodule 15 können durch keramische Wabenkörper gebildet sein. Die Ausführungsvariante gemäß Fig. 3 erfordert Katalysatoren 6 mit einem größeren Bereich der Reaktionstemperatur T_{R}, da die Temperatur durch die alternierende Richtung der Rauchgase A nicht konstant gehalten werden kann. Dafür benötigt man keinen eigenen Wärmetauscher 11, sondern dieser ist durch die Wärmespeichermodule 15 in den Kanälen 14 integriert. Durch den Entfall eines eigenen Wärmetauschers 11 ist der apparative Aufwand auch geringer.

## Patentansprüche

1. Verfahren zur Entstickung von Kohlenstoffmonoxid (CO) und gasförmige organische Stoffe enthaltenden Rauchgasen (A), die. bei der Zementklinkerherstellung anfallen, durch selektive katalytische Reduktion der Stickoxide (NOₓ), wobei die Rauchgase (A) in alternierender Richtung durch mindestens zwei Kanäle (14) mit mehreren aufeinanderfolgenden Wärmespeichermodulen (15) geleitet werden, und die katalytische Reduktion der Stickoxide (NOₓ) in zwischen den Wärmespeichermodulen (15) angeordneten Katalysatoren (6) durchgeführt wird, und wobei die Rauchgase (A) vor der katalytischen Reduktion durch Wärmeaustausch der rückgewonnenen Restwärme der entstickten Rauchgase (A) auf eine Reaktionstemperatur (T_{R}) von 160°C bis 500°C erwärmt werden, **dadurch gekennzeichnet, dass** die Verluste der Wärmeverschiebung des Wärmeaustauschs durch regenerative Nachverbrennung des Kohlenstoffmonoxids (CO) und der gasförmigen organischen Stoffe in den Rauchgasen (A) in einem zwischen den zumindest zwei Kanälen (14) angeordneten Raum (16) ausgeglichen werden, wobei zum Starten der Entstickung der Rauchgase (A) externe Wärmeenergie zugeführt wird, so dass die Zufuhr von externer Energie nur beim Starten notwendig ist.

2. Verfahren nach Anspruch 1, **dadurch gekennzeichnet, dass** die Rauchgase (A) zu mindestens 60% entstickt werden.

## Claims

1. A process for denoxing carbon monoxide (CO) and flue gases (A) containing gaseous organic substances which develops during the production of cement clinker, by selective catalytic reduction of the nitrogen oxides (NO), wherein the flue gases (A) are directed in alternating direction through at least two channels (14) with several sequentially arranged heat storage modules (15), and catalytic reduction of the nitrogen oxides (NO) is performed in catalysers (6) arranged between the heat storage modules (15), and wherein the flue gases (A), prior to the catalytic reduction, are heated by heat exchange of the recovered residual heat of the denoxed flue gases (A) to a reaction temperature (T) of 160 °C to 500 °C, **characterised in that** the heat displacement losses from the heat exchange are compensated for by regenerative postcombustion of the carbon monoxide (CO) and the gaseous organic substances in the flue gases (A) in a space (16) arranged between the at least two channels (14), wherein external heat energy is supplied for start-up denoxing of the flue gases (A), so that the supply of external energy is only necessary during start-up.

2. The process according to claim 1, **characterised in that** the flue gases (A) are denoxed to at least 60 %.

## Revendications

1. Procédé de dénitrification de gaz de fumée (A) contenant du monoxyde de carbone (CO) et des substances organiques gazeuses par réduction catalytique sélective des oxydes d'azote (NOₓ), dans lequel les gaz de fumée (A) sont conduits alternativement dans un sens et dans l'autre à travers au moins deux canaux (14) comportant plusieurs modules accumulateurs de chaleur (15) consécutifs, la réduction catalytique des oxydes d'azote (NOₓ) étant effectuée dans des catalyseurs (6) disposés entre les modules accumulateurs de chaleur (15), et dans lequel les gaz de fumée (A) sont réchauffés, avant la réduction catalytique par échange de chaleur de la chaleur résiduelle récupérée des gaz de fumée (A) dénitrifiés, à une température de réaction (Tᵣ) de 160 °C à 500 °C, **caractérisé en ce que** les pertes du transfert de chaleur sont compensées par postcombustion régénérative du monoxyde de carbone (CO) et des substances organiques gazeuses dans les gaz de fumée (A) dans un espace (16) disposé entre lesdits au moins deux canaux (14), dans lequel pour le démarrage de la dénitrification des gaz de fumée (A), de l'énergie calorifique externe est apportée, de sorte que l'apport de l'énergie externe n'est nécessaire que pendant le démarrage.

2. Procédé selon la revendication 1, **caractérisé en ce que** les gaz de fumée (A) sont dénitrifiés à au moins 60 %.
